# EUROPEAN PATENT SPECIFICATION

(11) **EP 2 786 348 B1**
(45) Date of publication and mention of the grant of the patent: **20.12.2017**
(21) Application number: 12812336.1
(22) Date of filing: 29.11.2012
(51) Int. Cl.: G06T 7/50

(54) **METHODS, SYSTEMS AND COMPUTER PROGRAM PRODUCTS FOR CREATING THREE DIMENSIONAL MESHES FROM TWO DIMENSIONAL IMAGES**
VERFAHREN, SYSTEME UND COMPUTERPROGRAMMPRODUKTE ZUR ERZEUGUNG DREIDIMENSIONALER MESHES AUS ZWEIDIMENSIONALEN BILDERN
PROCÉDÉS, SYSTÈMES ET PROGICIELS POUR LA CRÉATION DE MAILLAGES TRIDIMENSIONNELS À PARTIR D'IMAGES BIDIMENSIONNELLES

(30) Priority: 02.12.2011 US 201161566145 P; 23.01.2012 US 201213355960
(43) Date of publication of application: 08.10.2014
(73) Proprietor: Sony Mobile Communications AB, 221 88 Lund (SE)
(72) Inventor: ASTRAND, Per, SE-22465 Lund (SE)
(74) Representative: Hoffmann Eitle
(86) International application number: PCT/IB2012/002532
(87) International publication number: WO 2013/080021

(56) References cited:
- WO-A2-2007/052191
- ASHUTOSH SAXENA ET AL: "3-D Depth Reconstruction from a Single Still Image", INTERNATIONAL JOURNAL OF COMPUTER VISION, KLUWER ACADEMIC PUBLISHERS, BO, vol. 76, no. 1, 16 August 2007 (2007-08-16), pages 53-69, XP019557772, ISSN: 1573-1405, DOI: 10.1007/S11263-007-0071-Y
- FUA, PASCAL: "Combining stereo and monocular information to compute dense depth maps that preserve depth discontinuities", PROCEEDINGS OF THE 12TH INTERNATIONAL JOINT CONFERENCE ON ARTIFICIAL INTELLIGENCE, IJCAI'91, vol. 2, 1991, pages 1292-1298, XP002693911,
- RALLI J ET AL: "A method for sparse disparity densification using voting mask propagation", JOURNAL OF VISUAL COMMUNICATION AND IMAGE REPRESENTATION, ACADEMIC PRESS, INC, US, vol. 21, no. 1, 1 January 2010 (2010-01-01), pages 67-74, XP026826252, ISSN: 1047-3203 [retrieved on 2009-09-06]
- MCKEOWN D M JR ET AL: "Refinement of disparity estimates through the fusion of monocular image segmentations", PROCEEDINGS OF THE COMPUTER SOCIETY CONFERENCE ON COMPUTER VISION AND PATTERN RECOGNITION. CHAMPAIGN, IL, JUNE 15 - 18, 1992; [PROCEEDINGS OF THE COMPUTER SOCIETY CONFERENCE ON COMPUTER VISION AND PATTERN RECOGNITION], NEW YORK, IEEE, US, vol. -, 15 June 1992 (1992-06-15), pages 486-492, XP010029378, DOI: 10.1109/CVPR.1992.223146 ISBN: 978-0-8186-2855-9

## Description

### CLAIM OF PRIORITY

The present application claims priority from U.S. Provisional Application No. 61/566,145 (Attorney Docket No. 9342-534PR), filed December 2, 2011.

### FIELD

The present application relates generally to imaging, and more particularly to, methods, systems and computer program products for creating three dimensional (3D) meshes of 2D images.

### BACKGROUND

Creating three dimensional (3D) models from monocular two dimensional (2D) images presents a difficult problem. Computer-aided imagery is the process of rendering new 2D and 3D images of an object or a scene (hereinafter collectively "object") on a terminal screen or graphical user interface from two or more digitized 2D images with the assistance of the processing and data handling capabilities of a computer. Constructing a 3D model from 2D images may be utilized, for example, in computer-aided design (CAD), 3D teleshopping, and virtual reality systems, in which the goal of the processing is a graphical 3D model of a scene that was originally represented only by a finite number of 2D images. The 2D images from which the 3D model is constructed represent views of the object as perceived from different views or locations around the object. The images can be obtained using multiple cameras positioned around the object or scene, a single camera in motion around the object or scene, a camera array and the like. The information in the 2D images is combined and contrasted to produce a composite, computer-based graphical 3D model.

One current method of reconstructing a graphical 3D model of a scene using multiple 2D images is a depth map. A depth map is a 2D array of values for mathematically representing a surface in space, where the rows and columns of the array correspond to the x and y location information of the surface and the array elements are depth or distance readings to the surface from a given point or camera location. A depth map can be viewed as a grey scale image of an object, with the depth information replacing the intensity and color information, or pixels, at each point on the surface of the object, A graphical representation of an object can be estimated by a depth map. However, the accuracy of a depth map declines as the distances to the objects increase.

Other algorithms have been developed to create more accurate 3D models from 2D images. For example, texture based algorithms may be used to convert a still 2D image into a 3D model. One of these products is Make3D created by professors at Stanford University. However, the accuracy of the resulting 3D models still deteriorates after a certain distance.
The documents WO 2007/052191 A2 and Ashutosh Saxena et al: "3-D Depth reconstruction from a Single Still Image", International Journal of Computer Vision, Kluwer Academic Publishers, BO, vol. 76, no. 1, 16 August 2007 (2007-08-16), pages 53-69 and Fua, Pascal: "Combining stereo and monocular information to compute dense depth maps that preserve depth discontinuities", Proceedings of the 12th International Joint Conference on Artificial Intelligence, IJCAI'91, vol. 2, 1991, pages 1292-1298, XP002693911, and Ralli J et al: "A method for sparse disparity densification using voting mask propagation", Journal of Visual Communication and Image Representation, Academic Press, Inc, US, vol. 21, no. 1, 1 January 2010 (2010-01-01), pages 67-74, all disclose methods for obtaining a three-dimensional mesh from two-dimensional images, wherein a texture-based algorithm is applied to identified portions of a calculated depth map to obtain additional detail in the depth map, wherein the calculated depth map is combined with the obtained additional detail to provide a more accurate 3D mesh.

### SUMMARY

The present invention is defined by the appended independent claims. Exemplary embodiments of the present invention are given in the dependent claims.

Some embodiments of the present inventive concept provide methods for obtaining a three-dimensional (3D) mesh from two dimensional images, as defined in claim 1.

In further embodiments, the camera array may be one of a matrix of 4X4 camera and a matrix of 4X5 cameras.

In still further embodiments, the camera array may be included in a computational camera of a wireless communication device.

In the invention identifying portions of the calculated depth map includes marking regions in the depth map having a distance greater than d, where d is the distance into the depth map defining when the additional detail is needed.

In the invention, applying a texture based algorithm includes applying a texture based algorithm to the regions marked to obtain an improved mesh for the marked regions.

In still further embodiments, combining may further include combining the calculated depth map and the improved mesh for the marked regions to obtain the more accurate 3D mesh.

In the invention, combining is preceded by assigning a higher weight to the improved mesh for the marked regions of the depth map for regions with a distance greater than d; and assigning a higher weight to calculated depth map for regions in the depth map having a distance less than d.

Further embodiments of the present inventive concept provide a system for obtaining a three-dimensional (3D) mesh of two-dimensional (2D) images, as defined in claim 5.

Still further embodiments of the present inventive concept provide a computer program product for obtaining a three-dimensional (3D) mesh from two dimensional images, as defined in claim 9.

Other methods, systems and/or computer program products according to embodiments of the inventive concept will be or become apparent to one with skill in the art upon review of the following drawings and detailed description. It is intended that all such additional methods, systems and/or computer program products be included within the scope of the present inventive concept as defined by the accompanying claims.

### BRIEF DESCRIPTION OF THE DRAWINGS

The accompanying drawings, which are included to provide a further understanding of the inventive concept and are incorporated in and constitute a part of this application, illustrate certain embodiment(s) of the inventive concept. In the drawings:
Figure 1 is a simplified block diagram of a system including a camera array in accordance with some embodiments of the present inventive concept.
Figure 2 is a more detailed block diagram of a data processing system including modules in accordance with some embodiments of the present inventive concept.
Figure 3 is a block diagram of some electronic components, including a computational camera, of a wireless communication terminal in accordance with some embodiments of the present inventive concept.
Figure 4 is a flowchart illustrating operations in accordance with various embodiments of the present inventive concept.

### DETAILED DESCRIPTION OF EMBODIMENTS

In the following detailed description, numerous specific details are set forth in order to provide a thorough understanding of the present inventive concept. However, it will be understood by those skilled in the art that the present inventive concept may be practiced without these specific details. In other instances, well-known methods, procedures, components and circuits have not been described in detail so as not to obscure the present inventive concept.

As discussed above, creating three dimensional (3D) models from monocular two dimensional (2D) images presents a difficult problem. The existing texture based algorithms, for example, Make3D, and the depth maps from array cameras do not provide an adequate solution. For example, the accuracy of the depth map from an array camera declines as distances to the objects increase. This is due to the fact that there is a limited length between the cameras and the length between the cameras sets the possible resolution in determining the distance to the object. The human mind is trained to recognize far off objects and interpret the shapes and 3D properties depending on features such as textures, colors etc.

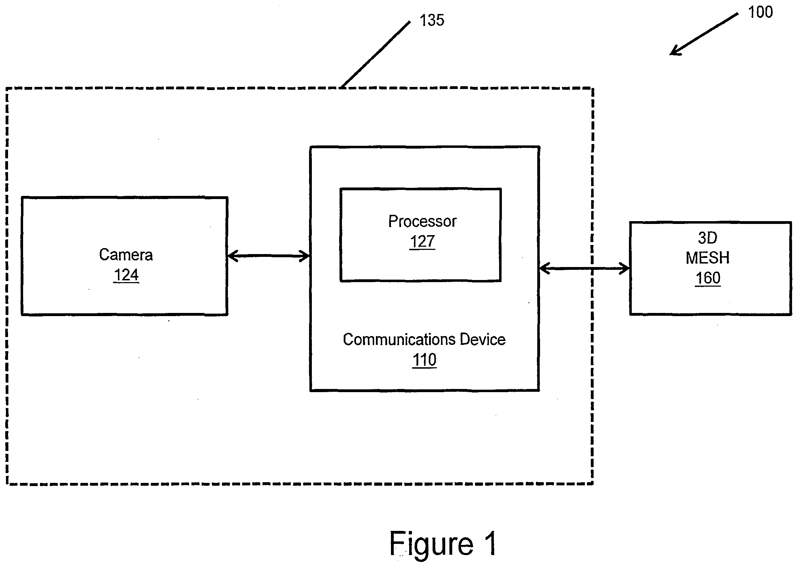

To address the issues with conventional methods, some embodiments of the present inventive concept combine aspects of the depth map method and the texture based algorithm to provide an improved 3D mesh. In particular, some embodiments of the present inventive concept use a depth map generated by a computational camera to identify areas that in the 3D image that need more detail and, then, fill in these areas using a texture based algorithm as will be discussed further herein with respect to Figures 1 through 4 below.

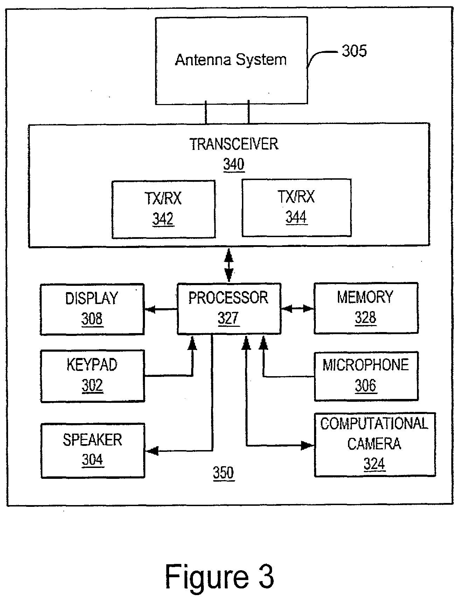

Referring first to Figure 1, a system 100 in accordance with some embodiments of the present inventive concept includes a camera 124, for example, a computational camera including a camera array, a communications device 110 including a processor 127 and an improved 3D mesh 160. As illustrated by the dotted line 135 surrounding the camera 124 and the communications device 110, in some embodiments these elements may all be included in a single device, for example, a wireless communications device which will be discussed further below with respect to Figure 3.

The camera 124, for example, a camera array, may be used to obtain a series of 2D images, which may be supplied to the processor 127 of the communications device 110. The camera 124 may be a matrix of, for example, 4X4 or 4X5 cameras, without departing from the scope of the present inventive concept.

The processor 127 may be configured to generate a larger image from the 2D images and generated a depth map from the larger image. Methods of generating a depth map are known to those of skill in the art. Any method may be used without departing from the scope of the inventive concept.

The processor 127 may be further configured to identify portions of the 3D mesh that may need more detail. As discussed above, after a certain distance, for example, 2.0-3.0 meters, the accuracy of the 3D image created using the depth map declines. A threshold function is used to mark the regions identified as needing more detail. For example, anything in the 3D mesh having a distance greater than 2.0 meters may be "marked" as needing more detail. It will be understood that the distance at which the image degrades is related to the physical dimension of the array camera being used. Accordingly, smaller cameras may have a smaller distance threshold and, similarly, larger cameras may have a larger distance threshold.

Some embodiments of the present inventive concept can tolerate some degradation in quality without requiring additional details. For example, if the accuracy of the 3D mesh is between 90-95 percent this may be tolerated. However, anything less than 90 percent accurate may be marked as needing more detail. Thus, in some embodiments, a threshold function is used to mark regions with a distance d > Td, where Td depends on the accuracy in the depth map.

The processor 127 may be further configured to use a texture based algorithm, for example, Make3D, to provide the details in the regions marked as needing more detail. In other words, the textured based algorithm may be used to fill in the missing details the depth map. Although embodiments of the present inventive concept discuss the use of Make3D, embodiments are not limited this configuration. Any texture based algorithm may be used without departing from the scope of the present inventive concept.

Finally, the processor 127 is configured to combine the depth map mesh and the texture based mesh to produce an improved 3D mesh 160 of the object or scene. The two meshes are weighted depending on the calculated accuracy of the mesh by assigning a higher weight to the texture based mesh for distances greater than d and assigning a higher weight to the depth map (camera array) mesh for distances less than d. As discussed above, the distance d is defined as the distance where accuracy becomes less than 90 percent. It will be understood that the distance at which the image degrades is related to the physical dimension of the array camera being used. Accordingly, smaller cameras may have a smaller distance threshold and, similarly, larger cameras may have a larger distance threshold.

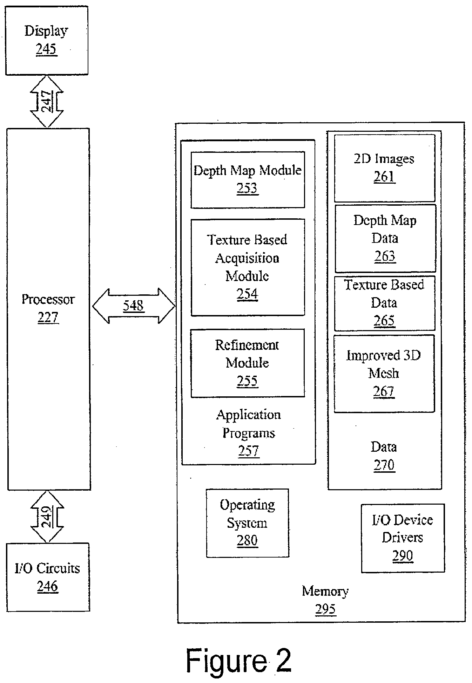

Referring now to Figure 2, a more detailed data processing system in accordance with some embodiments will be discussed. As illustrated in Figure 2, an exemplary data processing system that may be used to perform the calculations discussed above with respect to Figure 1 in accordance with some embodiments of the present inventive concept will be discussed. As illustrated, the data processing system includes a display 245, a processor 227, a memory 295 and input/output circuits 246. The data processing system may be incorporated in, for example, a wireless communications device, a personal computer, server, router or the like. The processor 227 communicates with the memory 295 via an address/data bus 248, communicates with the input/output circuits 246 via an address/data bus 249 and communicates with the display via a connection 247. The input/output circuits 246 can be used to transfer information between the memory 295 and another computer system or a network using, for example, an Internet Protocol (IP) connection. These components may be conventional components, such as those used in many conventional data processing systems, which may be configured to operate as described herein.

In particular, the processor 227 can be any commercially available or custom microprocessor, microcontroller, digital signal processor or the like. The memory 295 may include any memory devices containing the software and data used to implement the functionality circuits or modules used in accordance with embodiments of the present inventive concept. The memory 295 can include, but is not limited to, the following types of devices: cache, ROM, PROM, EPROM, EEPROM, flash memory, SRAM, DRAM and magnetic disk. In some embodiments of the present inventive concept, the memory 295 may be a content addressable memory (CAM).

As further illustrated in Figure 2, the memory 295 may include several categories of software and data used in the data processing system: an operating system 280; application programs 257; input/output device drivers 290; and data 270. As will be appreciated by those of skill in the art, the operating system 280 may be any operating system suitable for use with a data processing system, such as OS/2, AIX or zOS from International Business Machines Corporation, Armonk, NY, Windows95, Windows98, Windows2000 or WindowsXP from Microsoft Corporation, Redmond, WA, Unix, Linux or any Android operating system. The input/output device drivers 290 typically include software routines accessed through the operating system 280 by the application programs 257 to communicate with devices such as the input/output circuits 246 and certain memory 295 components. The application programs 257 are illustrative of the programs that implement the various features of the circuits and modules according to some embodiments of the present inventive concept. Finally, the data 270 represents the static and dynamic data used by the application programs 257, the operating system 280, the input/output device drivers 290, and other software programs that may reside in the memory 295. As illustrated in Figure 2, the data 270 may include, but is not limited to, 2D images 261, depth map data 263, texture based data 265 and improved 3D meshes 267 for use by the circuits and modules of the application programs 257 according to some embodiments of the present inventive concept as discussed above.

As further illustrated in Figure 2, the application programs 257 include a depth map module 253, a texture based acquisition module 254 and a refinement module 255. While the present inventive concept is illustrated with reference to the depth map module 253, the texture based acquisition module 254 and the refinement module 255 being application programs in Figure 2, as will be appreciated by those of skill in the art, other configurations fall within the scope of the present inventive concept. For example, rather than being application programs 257, the depth map module 253, the texture based acquisition module 254 and the refinement module 255 may also be incorporated into the operating system 280 or other such logical division of the data processing system, such as dynamic linked library code. Furthermore, the depth map module 253, the texture based acquisition module 254 and the refinement module 255 are illustrated in a single data processing system, as will be appreciated by those of skill in the art, such functionality may be distributed across one or more data processing systems. Thus, the present inventive concept should not be construed as limited to the configuration illustrated in Figure 2, but may be provided by other arrangements and/or divisions of functions between data processing systems. For example, although Figure 2 is illustrated as having multiple modules, the modules may be combined into three or less or more modules may be added without departing from the scope of the present inventive concept.

In particular, the depth map module 253 is configured obtain a lager image from the series of 2D images obtained using the camera array (124 Figure 1) and generate a depth map from the larger image. As discussed above, the calculation of depth maps are known to those of skill in the art. The refinement module 255 is configured to identify portions of the calculated depth map that need additional detail. The texture based acquisition module 254 is configured to apply a textured based algorithm to the identified portions of the calculated depth map to obtain the additional detail. Once the additional detail is obtained, the refinement module 255 combines the calculated depth map with the obtained additional detail to provide a more accurate 3D mesh of the obtained series of 2D images.

The refinement module 255 is configured to mark regions in the depth map having a distance greater than a distance d, where the distance d is the distance into the depth map defining when the additional detail is needed. As discussed above, in some embodiments this distance is from about 2.0 to about 3.0 meters. This may the distance when the accuracy degrades to below 90 percent in some embodiments.

The refinement module 255 is further configured to assign a higher weight to the improved mesh for the marked regions of the depth map for regions with a distance greater than d and assign a higher weight to the calculated depth map for regions in the depth map having a distance less than d.

Referring now to Figure 3, as discussed above, in some embodiments of the present inventive concept the data processing system may be included in a wireless communications device. As illustrated in Figure 3, a block diagram of a wireless communication terminal 350 that includes a computational camera 324 and a processor 327 in accordance with some embodiments of the present inventive concept will be discussed. As illustrated in Figure 3, the terminal 350 includes an antenna system 300, a transceiver 340, a processor 327, and can further include a conventional display 308, keypad 302, speaker 304, mass memory 328, microphone 306, and/or computational camera 324, one or more of which may be electrically grounded to the same ground plane as the antenna 300.

The transceiver 340 may include transmit/receive circuitry (TX/RX) that provides separate communication paths for supplying/receiving RF signals to different radiating elements of the antenna system 300 via their respective RF feeds.

The transceiver 340 in operational cooperation with the processor 327 may be configured to communicate according to at least one radio access technology in two or more frequency ranges. The at least one radio access technology may include, but is not limited to, WLAN (e.g., 802.11), WiMAX (Worldwide Interoperability for Microwave Access), TransferJet, 3GPP LTE (3rd Generation Partnership Project Long Term Evolution), Universal Mobile Telecommunications System (UMTS), Global Standard for Mobile (GSM) communication, General Packet Radio Service (GPRS), enhanced data rates for GSM evolution (EDGE), DCS, PDC, PCS, code division multiple access (CDMA), wideband-CDMA, and/or CDMA2000. Other radio access technologies and/or frequency bands can also be used in embodiments according to the inventive concept.

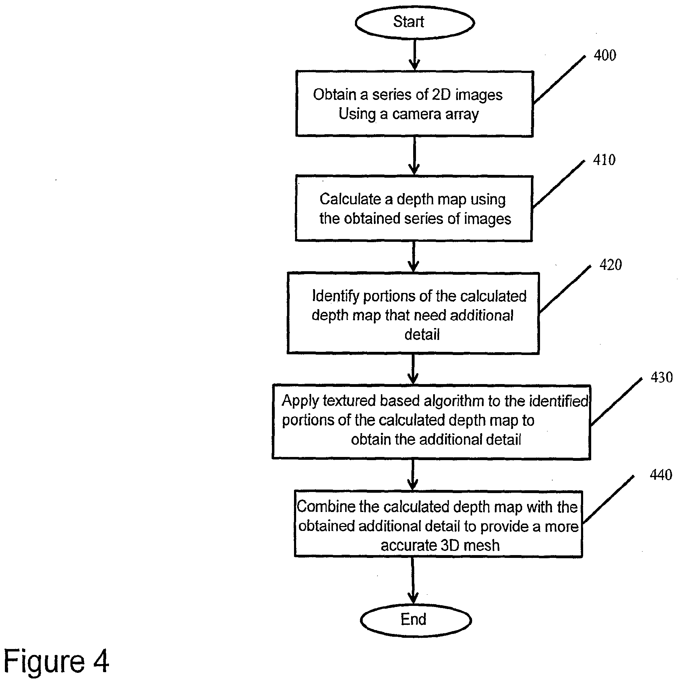

Referring now to the flowchart of Figure 4, operations for obtaining a three-dimensional (3D) mesh from two dimensional images in accordance with various embodiments will be discussed. As illustrated in Figure 4, operations begin at block 400 by obtaining a series of 2D images using a camera array. In some embodiments, the camera array is one of a matrix of 4X4 camera and a matrix of 4X5 cameras. As discussed above, in some embodiments, the camera array may be included in a computational camera of a wireless communication device.

A depth map is calculated using the obtained series of 2D images (block 410). In particular, the series of 2D images are used to generate a larger image and the depth map is generated from the larger image. Portions of the calculated depth map that need additional detail are identified (block 420). The portions of the calculated depth map is identified by marking regions in the depth map having a distance greater than d, where d is the distance into the depth map defining when the additional detail is needed. A textured based algorithm is applied to the identified portions of the calculated depth map to obtain the additional detail (block 430). The calculated depth map is combined with the obtained additional detail to provide a more accurate 3D mesh of the obtained series of 2D images (block 440).

A higher weight may be assigned to the improved mesh for the marked regions of the depth map for regions with a distance greater than d and a higher weight may be assigned to calculated depth map for regions in the depth map having a distance less than d.

Various embodiments were described herein with reference to the accompanying drawings, in which embodiments of the inventive concept are shown. This inventive concept may, however, be embodied in many different forms and should not be construed as limited to the embodiments set forth herein; rather, these embodiments are provided so that this disclosure will be thorough and complete, and will fully convey the scope of the inventive concept to those skilled in the art.

It will be understood that, when an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Furthermore, "coupled", "connected", "responsive", or variants thereof as used herein may include wirelessly coupled, connected, or responsive. Like numbers refer to like elements throughout. The terminology used herein is for the purpose of describing particular embodiments only and is not intended to be limiting of the inventive concept. As used herein, the singular forms "a", "an" and "the" are intended to include the plural forms as well, unless the context clearly indicates otherwise. Well-known functions or constructions may not be described in detail for brevity and/or clarity.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present inventive concept. Moreover, as used herein, the term "and/or" includes any and all combinations of one or more of the associated listed items.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, if used herein, the common abbreviation "e.g.", which derives from the Latin phrase *exempli gratia,* may be used to introduce or specify a general example or examples of a previously mentioned item, and is not intended to be limiting of such item. If used herein, the common abbreviation "i.e.", which derives from the Latin phrase *id est,* may be used to specify a particular item from a more general recitation.

Exemplary embodiments were described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit such as a digital processor, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). These computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, embodiments of the present inventive concept may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments were disclosed herein, in connection with the following description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments described herein, and of the manner and process of making and using them, and shall support claims to any such combination or subcombination.

For purposes of illustration and explanation only, various embodiments of the present inventive concept were described herein in the context of user equipment (e.g., "wireless user terminal(s)", "wireless communication terminal(s)", "wireless terminal(s)", "terminal(s)", "user terminal(s)", etc.) that are configured to carry out cellular communications (e.g., cellular voice and/or data communications). It will be understood, however, that the present inventive concept is not limited to such embodiments and may be embodied generally in any wireless communication terminal that is configured to transmit and receive according to one or more RATs. Moreover, "user equipment" is used herein to refer to one or more pieces of user equipment. Acronyms "UE" and "UEs" may be used to designate a single piece of user equipment and multiple pieces of user equipment, respectively.

As used herein, the term "user equipment" includes cellular and/or satellite radiotelephone(s) with or without a multi-line display; Personal Communications System (PCS) terminal(s) that may combine a radiotelephone with data processing, facsimile and/or data communications capabilities; Personal Digital Assistant(s) (PDA) or smart phone(s) that can include a radio frequency transceiver and a pager, Internet/Intranet access, Web browser, organizer, calendar and/or a global positioning system (GPS) receiver; and/or conventional laptop (notebook) and/or palmtop (netbook) computer(s) or other appliance(s), which include a radio frequency transceiver. As used herein, the term "user equipment" also includes any other radiating user device that may have time-varying or fixed geographic coordinates and/or may be portable, transportable, installed in a vehicle (aeronautical, maritime, or land-based) and/or situated and/or configured to operate locally and/or in a distributed fashion over one or more terrestrial and/or extra-terrestrial location(s). Finally, the terms "node" or "base station" includes any fixed, portable and/or transportable device that is configured to communicate with one or more user equipment and a core network, and includes, for example, terrestrial cellular base stations (including microcell, picocell, wireless access point and/or ad hoc communications access points) and satellites, that may be located terrestrially and/or that have a trajectory above the earth at any altitude.

In the drawings and specification, there have been disclosed embodiments of the inventive concept and, although specific terms are employed, they are used in a generic and descriptive sense only and not for purposes of limitation, the scope of the inventive concept being set forth in the following claims.

## Claims

1. A method for obtaining a three-dimensional (3D) mesh from two dimensional images, the method comprising:
obtaining a series of 2D images using a camera array;
calculating a depth map using the obtained series of 2D images;
identifying portions of the calculated depth map that need additional detail;
applying a texture based algorithm to the identified portions of the calculated depth map to obtain the additional detail in the depth map; and
combining the calculated depth map with the obtained additional detail to provide a more accurate 3D mesh,
wherein at least one of the obtaining, calculating, identifying, applying and combining are implemented by at least one processor;
wherein
identifying portions of the calculated depth map comprises marking regions in the depth map having a distance greater than d, where d is the distance into the depth map defining when the additional detail is needed;
wherein applying a texture based algorithm comprises applying a texture based algorithm to the regions marked to obtain an improved mesh for the marked regions; and
wherein combining is preceded by:
assigning a higher weight to the improved mesh for the marked regions of the depth map for regions with a distance greater than d; and
assigning a higher weight to calculated depth map for regions in the depth map having a distance less than d.

2. The method of Claim 1, wherein the camera array is one of a matrix of 4X4 cameras and a matrix of 4X5 cameras.

3. The method of Claim 1, wherein the camera array is included in a computational camera of a wireless communication device.

4. The method of Claim 1, wherein combining further comprises combining the calculated depth map and the improved mesh for the marked regions to obtain the more accurate 3D mesh.

5. A system for obtaining a three-dimensional (3D) mesh of two-dimensional (2D) images, the system comprising:
a camera configured to obtain a series of 2D images using a camera array; and
a processor including:
a depth map module configured to calculate a depth map using the obtained series of 2D images;
a refinement module configured to identify portions of the calculated depth map that need additional detail in the depth map; and
a texture based acquisition module configured to apply a texture based algorithm to the identified portions of the calculated depth map to obtain the additional detail,
wherein the refinement module is further configured to combine the calculated depth map with the obtained additional detail to provide a more accurate 3D mesh;
wherein
the refinement module is further configured to mark regions in the depth map having a distance greater than d, where d is the distance into the depth map defining when the additional detail is needed;
wherein the texture based acquisition module is further configured to apply a texture based algorithm to the regions marked to obtain an improved mesh for the marked regions; and
wherein the refinement module is further configured to:
assign a higher weight to the improved mesh for the marked regions of the depth map for regions with a distance greater than d; and
assign a higher weight to calculated depth map for regions in the depth map having a distance less than d.

6. The system of Claim 5, wherein the system is included in a wireless communication device.

7. The system of Claim 5, wherein the camera is included in a wireless communications device.

8. The system of Claim 7, wherein the refinement module is further configured to combine the calculated depth map and the improved mesh for the marked regions to obtain the more accurate 3D mesh.

9. A computer program product comprising instructions which, when the program is executed by a computer, cause the computer to carry out the method of claim 1.

## Patentansprüche

1. Verfahren zum Erhalten eines dreidimensionalen (3D) Gitternetzes aus zweidimensionalen Bildern, wobei das Verfahren umfasst:
Erhalten einer Reihe von 2D-Bildern mittels einer Kameraanordnung;
Berechnung einer Tiefenkarte mittels der erhaltenen Reihe von 2D-Bildern;
Identifizierung von Teilen der berechneten Tiefenkarte, die zusätzliche Details benötigen;
Anwendung eines texturbasierten Algorithmus auf die identifizierten Teile der berechneten Tiefenkarte, um die zusätzlichen Details in der Tiefenkarte zu erhalten; und
Kombination der berechneten Tiefenkarte mit den erhaltenen zusätzlichen Details, um ein genaueres 3D-Gitternetz bereitzustellen,
wobei mindestens eines von dem Erhalten, Berechnung, Identifizierung, Anwendung und Kombination von mindestens einem Prozessor implementiert wird;
wobei
Identifizierung von Teilen der berechneten Tiefenkarte das Markieren von Bereichen in der Tiefenkarte umfasst, die einen Abstand größer als d aufweisen, wobei d der Abstand in der Tiefenkartendefinition ist, wenn die zusätzlichen Details benötigt werden;
wobei Anwendung eines texturbasierten Algorithmus die Anwendung eines texturbasierten Algorithmus auf die Regionen umfasst, markiert zum Erhalten eines verbesserten Gitternetzes für die markierten Bereiche; und
wobei der Kombination vorausgeht:
Zuweisung einer höheren Bedeutung an das verbesserte Gitternetz für die markierten Bereiche der Tiefenkarte, für Bereiche mit einem Abstand größer als d; und
Zuweisung einer höheren Bedeutung an die berechnete Tiefenkarte für Bereiche in der Tiefenkarte mit einem Abstand geringer als d.

2. Verfahren nach Anspruch 1, wobei die Kameraanordnung eine Matrix von 4X4 Kameras und eine Matrix von 4X5 Kameras ist.

3. Verfahren nach Anspruch 1, wobei die Kameraanordnung in einer computergestützten Kamera einer drahtlosen Kommunikationsvorrichtung enthalten ist.

4. Verfahren nach Anspruch 1, wobei Kombination weiter eine Kombination der berechneten Tiefenkarte und des verbesserten Gitternetzes für die markierten Bereiche zum Erhalten des genaueren 3D-Gitternetzes umfasst.

5. System zum Erhalten eines dreidimensionalen (3D) Gitternetzes aus zweidimensionalen (2D) Bildern, wobei das System umfasst:
eine Kamera, konfiguriert zum Erhalten einer Reihe von 2D-Bildern mittels einer Kameraanordnung; und
einen Prozessor, aufweisend:
ein Tiefenkartenmodul, konfiguriert zur Berechnung einer Tiefenkarte mittels der erhaltenen Reihe von 2D-Bildern;
ein Verfeinerungsmodul, konfiguriert zur Identifizierung von Teilen der berechneten Tiefenkarte, die zusätzliche Details in der Tiefenkarte benötigen; und
ein texturbasiertes Erfassungsmodul, konfiguriert zur Anwendung eines texturbasierten Algorithmus auf die identifizierten Teile der berechneten Tiefenkarte zum Erhalten der zusätzlichen Details,
wobei das Verfeinerungsmodul weiter konfiguriert ist, die berechnete Tiefenkarte mit den erhaltenen zusätzlichen Details zu kombinieren, um ein genaueres 3D-Gitternetz zu bestimmen;
wobei
das Verfeinerungsmodul weiter konfiguriert ist, Bereiche auf der Tiefenkarte zu markieren, die einen Abstand größer als d aufweisen, wobei d der Abstand in der Tiefenkartendefinition ist, wenn die zusätzlichen Details benötigt werden;
wobei das texturbasierte Erfassungsmodul weiter konfiguriert ist, um einen texturbasierten Algorithmus auf die Bereiche anzuwenden, markiert zum Erhalten eines verbesserten Gitternetzes für die markierten Bereiche; und
wobei das Verfeinerungsmodul weiter konfiguriert ist, zur:
Zuweisung einer höheren Bedeutung für das verbesserte Gitternetz für die markierten Bereiche der Tiefenkarte, für Bereiche mit einem Abstand größer als d; und
Zuweisung einer höheren Bedeutung an berechnete Tiefenkarte für Bereiche in der Tiefenkarte, die einen Abstand geringer als d aufweisen.

6. System nach Anspruch 5, wobei das System in einer drahtlosen Kommunikationsvorrichtung enthalten ist.

7. System nach Anspruch 5, wobei die Kamera in einer drahtlosen Kommunikationsvorrichtung enthalten ist.

8. Das System nach Anspruch 7, wobei das Verfeinerungsmodul weiter konfiguriert ist, die berechnete Tiefenkarte und das verbesserte Gitternetz für die markierten Bereiche zu kombinieren, um ein genaueres 3D-Gitternetz zu erhalten.

9. Computerprogrammprodukt, umfassend Anweisungen, die, wenn das Programm von einem Computer ausgeführt wird, den Computer dazu veranlasst, das Verfahren nach Anspruch 1 auszuführen.

## Revendications

1. Procédé destiné à obtenir un maillage tridimensionnel (3D) à partir d'images bidimensionnelles, le procédé consistant à :
obtenir une série d'images 2D en utilisant un groupement de caméras ;
calculer une carte de profondeur en utilisant la série d'images 2D ;
identifier des parties de la carte de profondeur calculée qui nécessitent un détail supplémentaire ;
appliquer un algorithme à base de texture aux parties identifiées de la carte de profondeur calculée afin d'obtenir le détail supplémentaire dans la carte de profondeur ; et
combiner la carte de profondeur calculée avec le détail supplémentaire afin de fournir un maillage 3D plus précis,
dans lequel au moins l'un de l'obtention, du calcul, de l'identification, de l'application et de la combinaison sont mis en oeuvre par au moins un processeur ;
dans lequel l'identification de parties de la carte de profondeur calculée consiste à marquer des régions de la carte de profondeur ayant une distance supérieure à d, où d est la distance, dans la carte de profondeur, définissant les moments où le détail supplémentaire est nécessaire ;
dans lequel l'application d'un algorithme à base de texture consiste à appliquer un algorithme à base de texture aux régions marquées afin d'obtenir un maillage amélioré pour les régions marquées ; et
dans lequel la combinaison est précédée par les étapes consistant à :
affecter un poids plus élevé au maillage amélioré pour les régions marquées de la carte de profondeur pour des régions ayant une distance supérieure à d ; et
affecter un poids plus élevé à la carte de profondeur calculée pour des régions de la carte de profondeur ayant une distance inférieure à d.

2. Procédé selon la revendication 1, dans lequel le groupement de caméras est l'une d'une matrice de 4X4 caméras et d'une matrice de 4X5 caméras.

3. Procédé selon la revendication 1, dans lequel le groupement de caméras est contenu dans une caméra calculatoire d'un dispositif de communication sans fil.

4. Procédé selon la revendication 1, dans lequel la combinaison consiste en outre à combiner la carte de profondeur calculée et le maillage pour les régions marquées afin d'obtenir le maillage 3D plus précis.

5. Système pour obtenir un maillage tridimensionnel (3D) d'images bidimensionnelles (2D), le système comprenant :
une caméra configurée pour obtenir une série d'images 2D en utilisant un groupement de caméras ; et
un processeur comportant :
un module de carte de profondeur configuré pour calculer une carte de profondeur en utilisant la série d'images 2D ;
un module d'affinement configuré pour identifier des parties de la carte de profondeur calculée qui nécessitent un détail supplémentaire dans la carte de profondeur ; et
une module d'acquisition à base de texture configuré pour appliquer un algorithme à base de texture aux parties identifiées de la carte de profondeur calculée afin d'obtenir le détail supplémentaire,
dans lequel le module d'affinement est en outre configuré pour combiner la carte de profondeur calculée avec le détail supplémentaire afin de fournir un maillage 3D plus précis ;
dans lequel le module d'affinement est en outre configuré pour marquer des régions de la carte de profondeur ayant une distance supérieure à d, où d est la distance, dans la carte de profondeur, définissant les moments où le détail supplémentaire est nécessaire ;
dans lequel la module d'acquisition à base de texture est en outre configuré pour appliquer un algorithme à base de texture aux régions marquées afin d'obtenir un maillage amélioré pour les régions marquées ; et
dans lequel le module d'affinement est en outre configuré pour :
affecter un poids plus élevé au maillage amélioré pour les régions marquées de la carte de profondeur pour des régions ayant une distance supérieure à d ; et
affecter un poids plus élevé à la carte de profondeur calculée pour des régions de la carte de profondeur ayant une distance inférieure à d.

6. Système selon la revendication 5, dans lequel le système est contenu dans un dispositif de communication sans fil.

7. Système selon la revendication 5, dans lequel la caméra est contenue dans un dispositif de communication sans fil.

8. Système selon la revendication 7, dans lequel le module d'affinement est en outre configuré pour combiner la carte de profondeur calculée et le maillage pour les régions marquées afin d'obtenir le maillage 3D plus précis.

9. Produit de programme d'ordinateur comprenant des instructions qui, lorsque le programme est exécuté par un ordinateur, amènent l'ordinateur à mettre en oeuvre le procédé selon la revendication 1.
